# EUROPÄISCHE PATENTSCHRIFT

(11) **EP 2 946 462 B1**
(45) Veröffentlichungstag und Bekanntmachung des Hinweises auf die Patenterteilung: **11.12.2019**
(21) Anmeldenummer: 13780172.6
(22) Anmeldetag: 24.10.2013
(51) Int. Cl.: H02K 15/04

(54) **ELEKTROTECHNISCHE SPULE UND/ODER SPULENWICKLUNG, VERFAHREN ZU IHRER HERSTELLUNG SOWIE ELEKTRISCHES GERÄT**
ELECTROTECHNICAL COIL AND/OR COIL WINDING, METHOD FOR THE PRODUCTION THEREOF AND ELECTRICAL APPLIANCE
BOBINE ET/OU ENROULEMENT ELECTROTECHNIQUE, PROCEDE DE FABRICATION ASSOCIE ET APPAREIL ELECTRIQUE

(30) Priorität: 18.01.2013 DE 102013000899
(43) Veröffentlichungstag der Anmeldung: 25.11.2015
(73) Patentinhaber: Volkswagen Aktiengesellschaft, 38440 Wolfsburg (DE)
(72) Erfinder: STÖHR, Gerd, 29392 Wesendorf (DE); BUGIEL, Peter, 34277 Fuldabrück (DE)
(86) Internationale Anmeldenummer: PCT/EP2013/072332
(87) Internationale Veröffentlichungsnummer: WO 2014/111179

(56) Entgegenhaltungen:
- EP-A1- 2 148 410
- WO-A1-2012/127603
- JP-A- 2004 336 969

## Beschreibung

Die Erfindung betrifft eine elektrotechnische Spule und/oder Spulenwicklung. Die Erfindung betrifft ferner ein Verfahren zur Herstellung einer elektrotechnischen Spule und/oder Spulenwicklung. Die Erfindung betrifft weiterhin ein elektrisches Gerät.

### Stand der Technik

Aus der Druckschrift EP 2 387 135 A2 sind eine elektrotechnische Spule in Gusstechnik, ein Herstellungsverfahren für eine solche Spule und Elektromaschinen, verwendend solche Spulen, bekannt. Beschrieben wird in dieser Druckschrift ein Verfahren zum Herstellen einer elektrotechnischen Spule mit einer oder mehreren Wicklung(en), wobei eine eine Spulengeometrie enthaltende Negativform, insbesondere eine verlorene Form oder eine Dauerform, bereitgestellt oder hergestellt wird, wobei ein zur Ausbildung der Wicklung(en) geeignetes Spulenmaterial, insbesondere ein elektrisch leitfähiges Metall, in flüssiger Form in diese Negativform gegossen wird, und wobei dieses Spulenmaterial erstarrt wird und/oder man dieses Spulenmaterial unter kontrollierten Bedingungen erstarren lässt. Beschrieben werden ferner entsprechend hergestellte Spulen. Demgemäß werden gießtechnisch herzustellende Spulen bzw. Spulenwicklungen in einer Spulenvorgeometrie gegossen, in der die einzelnen Windungen so weit in Richtung der Spulenachse auseinandergezogen sind, dass für die Spulenwicklung eine Gussform herstellbar ist. Nach dem Gießen und gegebenenfalls weiteren Bearbeitungsschritten erfolgt ein Umformen der Spule bzw. der Spulenwicklung durch Zusammenpressen in eine Spulenendgeometrie.

Das in der Druckschrift EP 2 387 135 A2 beschriebene Verfahren zum Herstellen einer elektrotechnischen Spule kann somit die folgenden Schritte umfassen:
1. Konstruktion der Spulenendgeometrie.
2. Auseinanderziehen dieser Spulenendgeometrie in diejenige Spulengeometrie, die in der zum Abguss verwendeten Negativform enthalten sein soll; dies soll in der Regel die Spulenvorgeometrie sein. Hiermit wird ein notwendiger Abstand der Wicklungen eingestellt. Der Abstand wird durch einen machbaren Umformgrad, gießtechnische Anforderungen und die Art eines Isolationsauftrags definiert.
3. Herstellen einer geeigneten Negativform in einem Formwerkstoff; als solcher werden eine Einbettmasse oder für Druckguss oder Kokillenguss metallische Werkstücke genannt, oder Herstellen eines entsprechenden Positivmodells, welches dann in einem geeigneten Formstoff, als solcher werden Sand oder Einbettmasse genannt, eingebettet wird und ggf. nach Abdruck als endgültige, zum Gießen des Spulenmaterials verwendete Negativform wieder entfernt wird oder während des Gießens zersetzt wird; letzteres wird als für Sandguss, Feinguss oder das sogenannte Lost Foam-Verfahren geltend genannt. Die im Formwerkstoff bzw. im Formstoff erhaltene Hohlgeometrie dient somit als Negativform zum Gießen des zur Ausbildung der Wicklungen der Spule geeigneten Spulenmaterials. Die entsprechenden vorgenannten Gussverfahren werden dabei als grundsätzlich bekannt vorausgesetzt.
4. Gravitations- und/oder druckunterstütztes Abgießen des Spulenmaterials in die Negativform.
5. Optimal soll anschließend das Entformen und Säubern des abgegossenen Spulenmodells erfolgen können.
6. Optional soll schließlich ein Weichglühen des - ggf. gesäuberten - Spulenmodells erfolgen können.
7. Nun soll ein Aufbringen der Isolation erfolgen können. Als Ausgestaltung dieses Verfahrensschrittes werden Eintauchen in Isolationslack oder ein Beschichtungsprozess genannt.
8. Schließlich erfolgt ein Zusammenpressen der abgegossenen, ggf. gesäuberten und ggf. weichgeglühten Spule in die Spulenendgeometrie.

Gemäß den weiteren Ausführungen in der Druckschrift EP 2 387 135 A2 werden die Schritte 7. und 8. auch als in umgekehrter Reihenfolge durchführbar bezeichnet.

Dabei soll mit dem beschriebenen Verfahren und der durch dieses hergestellten elektrotechnischen Spule die Aufgabe gelöst werden, eine elektrotechnische Spule zum Erzielen eines erhöhten Füllfaktors bzw. Nutfüllfaktors zur Verfügung zu stellen, die auf zuverlässige und einfache Art und Weise reproduzierbar wirtschaftlich hergestellt werden kann. Darüber hinaus soll ein entsprechendes Herstellungsverfahren zur Verfügung gestellt werden. Die Druckschrift EP 2 387 135 A2 nennt ferner entsprechende Elektromaschinen, insbesondere Elektromotoren oder Drehstrom-Synchronmaschinen, die mindestens eine derartige Spule für ihren Betrieb einsetzen, sowie die Verwendung der beschriebenen elektrotechnischen Spulen in den vorstehend genannten Elektromaschinen bzw. elektrischen Maschinen.

Gemäß dem durch die Druckschrift EP 2 387 135 A2 gegebenen Stand der Technik erfolgt somit eine Herstellung von Spulenwicklungen mittels einer Gusstechnik, so dass die in einer vordefinierten speziellen Geometrie gegossenen Spulenwicklungen eine optimale Ausnutzung der zur Verfügung stehenden Nutfläche ermöglichen.

Ferner wird es in der Druckschrift EP 2 387 135 A2 als aus fertigungstechnischer Sicht vorteilhaft bezeichnet, dass die Konstruktion des gießtechnisch herzustellenden Halbzeugs in Form einer Spulenvorgeometrie von der Endkontur der Spule abweicht. So wird gießtechnisch ein bestimmter Abstand, in der Regel 1 bis 2 mm, zwischen den einzelnen Windungen als erforderlich bezeichnet. Durch ein Beschichtungsverfahren werden die gegossenen Spulen anschließend mit einer Isolationslage beschichtet und durch Umformung, d.h. Zusammenpressen, in eine Endkontur, nämlich die Spulenendgeometrie, gebracht. Die hierfür notwendigen plastischen Verformungen sind bei der Konstruktion des Modells zu berücksichtigen.

Die derart gießtechnisch hergestellten Spulen zeichnen sich gemäß den Ausführungen in der Druckschrift EP 2 387 135 A2 durch einen maximalen Füllfaktor in einer Nut eines Stators einer elektrischen Maschine bei gleichzeitiger Beibehaltung der Isolationssicherheit sowie durch eine Gewichts- und Bauraumreduktion aus. Dabei können gemäß den Ausführungen der Druckschrift EP 2 387 135 A2 Füllfaktoren bis zu 95 % und mehr erreicht werden. Darüber hinaus bewirkt gemäß den Ausführungen der Druckschrift EP 2 387 135 A2 die dort beschriebene technische Lehre die Einbeziehung der einzelnen Windungen in die Konstruktion und die Auslegung der Spulengeometrie für eine bedarfsgerechte Spulenkonstruktion bei gleichzeitig reduzierten Restriktionen hinsichtlich Geometrie und Fertigung.

Schließlich soll gemäß den Ausführungen in der Druckschrift EP 2 387 135 A2 durch die flache, senkrecht zu einem Statorzahn einer elektrischen Maschine, in der die beschriebene Spule eingesetzt ist, angeordnete Leitergeometrie eine Erhöhung des ohmschen Widerstands der Spule infolge der Stromverdrängung bei hohen Frequenzen minimiert werden. Dadurch sollen bei Elektromotoren Verluste insbesondere bei höheren Drehzahlen verringert und damit der Wirkungsgrad gesteigert werden.

Der flachen Ausbildung der Leitergeometrie, d.h. einer Dickenabmessung parallel zum Statorzahn der elektrischen Maschine, in der die beschriebene Spule eingesetzt werden soll, sind jedoch insbesondere durch die gießtechnische Herstellung Grenzen in Form einer Mindestabmessung gesetzt. Damit lässt sich in einer derartigen elektrischen Maschine mit vorgegebenen Abmessungen der Statorzähne nur eine Spule mit einer begrenzten Windungszahl einsetzen. Die erreichbare Windungszahl hat sich für einige Anwendungen bzw. Dimensionierungen elektrischer Maschinen als zu gering erwiesen.

Aus der gattungsbildenden JP2004-336969 A ist eine Spule mit mehreren Windungen bekannt, welche gießtechnisch hergestellt wird. Jede der Windungen ist einer dieser Windung zugeordneten Windungsebene zugeordnet, wobei die Windungsebenen senkrecht zu einer gemeinsamen Spulenachse stehen.

Weiterhin ist aus der EP 2 148 410 A1 eine Spule mit zwei konzentrisch angeordneten Windungen in einer Windungsebene bekannt. Schließlich offenbart die WO 2012/127603 A1 eine umformtechnisch hergestellte Spule mit mehreren Windungen.

### Darstellung der Erfindung: Aufgabe, Lösung, Vorteile

Die Erfindung hat die Aufgabe, bei einer elektrotechnischen Spule der beschriebenen Art die erreichbare Windungszahl zu erhöhen. Die Erfindung hat ferner die Aufgabe, ein Verfahren zur Herstellung einer derartigen elektrotechnischen Spule mit erhöhter Windungszahl zu schaffen. Schließlich hat die Erfindung die Aufgabe, ein elektrisches Gerät mit einer elektrotechnischen Spule mit erhöhter Windungszahl bereitzustellen.

Diese Aufgabe wird erfindungsgemäß gelöst durch eine gießtechnisch hergestellte elektrotechnische Spule und/oder Spulenwicklung, umfassend zwei oder mehrere Windungen, wobei zumindest weitgehend jede der Windungen zumindest im Wesentlichen in einer dieser Windung zugeordneten Windungsebene angeordnet ist, wobei die Windungsebene wenigstens weitgehend senkrecht auf einer allen Windungen wenigstens im wesentlichen gemeinsamen Spulenachse steht, wobei in einer oder mehreren der Windungsebenen wenigstens zwei Windungen zumindest in einem Einbauzustand wenigstens im Wesentlichen konzentrisch ineinander angeordnet sind.

Dabei wird im Rahmen der vorliegenden Erfindung unter einer Spule ein Bauelement der Elektrotechnik verstanden. Somit sind erfindungsgemäße Spulen für beliebige Anwendungen in der Elektrotechnik, z.B. im Elektromaschinenbau, insbesondere im Elektromotoren- und Elektrogeneratorenbau, bestimmt und einsetzbar. Daher werden erfindungsgemäße Spulen nachfolgend als elektrotechnische Spulen bezeichnet.

Gießtechnisch hergestellt ist eine derartige elektrotechnische Spule im Zusammenhang mit der Beschreibung der vorliegenden Erfindung dann, wenn eine Herstellung aus einem leitenden Werkstoff, vorzugsweise einem Metall oder einer Metalllegierung, mit gießtechnischen Herstellungsverfahren vorliegt.

Umformtechnisch hergestellt ist eine derartige elektrotechnische Spule im Zusammenhang mit der Beschreibung der vorliegenden Erfindung dann, wenn eine Herstellung aus einem leitenden Werkstoff, vorzugsweise einem Metall oder einer Metalllegierung, mit umformtechnischen Herstellungsverfahren vorliegt. Derartige umformtechnische Herstellungsverfahren sind im Zusammenhang mit der vorliegenden Erfindung z.B. Warm- und Kaltwalzen, Schmieden, Biegen, Pressen, Ziehen, Abkanten, Stanzen und dergleichen.

Als eine Windung wird im Rahmen der vorliegenden Erfindung eine einfache, zumindest im Wesentlichen vollständige Umschlingung eines Spulenkerns durch einen elektrischen Leiter bezeichnet. Dabei kann als Spulenkern ein elektrisch isolierendes Bauteil, z.B. ein isolierender Spulenträger, aber auch ein magnetisch leitendes Bauteil bezeichnet sein, um das der elektrische Leiter geschlungen ist. In einem Sonderfall kann an die Stelle des Spulenkerns auch zumindest teilweise ein luftgefüllter Raumbereich treten.

Gemäß der für die vorliegende Erfindung benutzten Begriffsbestimmung wird mit einer Spulenwicklung eine Anordnung bezeichnet, die zwei oder mehrere miteinander elektrisch leitend verbundene Windungen des elektrischen Leiters umfasst. Eine Spule ist mit diesen Begriffsbestimmungen eine Anordnung, die zusätzlich zu einer Spulenwicklung noch weitere Konstruktionselemente umfassen kann, z.B. eine elektrische Isolierung der Windungen, den Spulenkern, elektrische Anschlusselemente oder dergleichen.

In der Anordnung einer Spulenwicklung der vorstehend definierten Art ist zumindest weitgehend jeder der von der Spulenwicklung umfassten Windungen eine Windungsebene zugeordnet. In dieser Windungsebene liegt der die betreffende Windung bildende elektrische Leiter wenigstens zum großen Teil. Zu zwei oder mehreren Windungen, die zumindest im Einbauzustand wenigstens im Wesentlichen konzentrisch ineinander angeordnet sind, liegt der diese Windungen bildende elektrische Leiter zumindest weitgehend in derselben Windungsebene. Dabei sind in der erfindungsgemäßen Anordnung der elektrotechnischen Spule bzw. Spulenwicklung alle diese Windungsebenen senkrecht zu einer gemeinsamen Spulenachse ausgerichtet, entlang derer die einzelnen Windungen zur Bildung der Spulenwicklung aufgereiht sind, d.h. es sind auch die Windungsebenen aller Windungen entlang der Spulenachse aufgereiht.

Wie nachstehend noch näher erläutert werden wird, folgt dabei die Herstellung der erfindungsgemäßen elektrotechnischen Spule bzw. Spulenwicklung, insoweit diese gießtechnisch vorgenommen wird, in Grundzügen der in der Druckschrift EP 2 387 135 A2 beschriebenen Lehre, gemäß derer gießtechnisch herzustellende Spulen bzw. Spulenwicklungen in einem Fertigungszustand, der dort als Spulenvorgeometrie bezeichnet ist, zu gießen, in dem die einzelnen Windungen so weit in Richtung der Spulenachse auseinandergezogen sind, dass für die Spulenwicklung eine Gussform herstellbar ist. Nach dem Gießen und gegebenenfalls weiteren Bearbeitungsschritten erfolgt ein Umformen der Spule bzw. der Spulenwicklung durch Zusammenpressen in den Einbauzustand, der dort als Spulenendgeometrie bezeichnet ist.

Wird dagegen die elektrotechnische Spule bzw. Spulenwicklung rein umformtechnisch hergestellt, erfolgt die Herstellung nicht nur im letzten Fertigungsschritt, der das Umformen der Spule bzw. der Spulenwicklung durch Zusammenpressen in den Einbauzustand, der dort als Spulenendgeometrie bezeichnet ist, vorsieht, sondern bevorzugt auch in vorangehenden Fertigungsschritten bis zu dem als Spulenvorgeometrie bezeichneten Fertigungszustand ebenfalls umformtechnisch, z.B. ausgehend von einem gewalzten Flachprofil aus dem leitenden Werkstoff durch Biegen in die Spulenvorgeometrie. Z.B. durch Pressen, Schmieden oder Walzen oder dergleichen wird dabei außerdem vor dem Biegen eine gewünschte Variation des Querschnitts des elektrischen Leiters entlang seiner Längserstreckung, d.h. entlang der Richtung, in der im späteren Betrieb der herzustellenden Spule und/oder Spulenwicklung ein elektrischer Strom fließt, welche Richtung als Stromflussrichtung bezeichnet ist, hergestellt. Wahlweise wird das genannte Biegen des Leiters durch mit entsprechendem Ergebnis vorgenommenes Pressen, Schmieden oder Walzen oder dergleichen wenigstens teilweise ersetzt.

Die Erfindung ermöglicht in einfacher Weise eine Erhöhung der Windungszahl bei einer demgemäß gestalteten elektrotechnischen Spule bzw. Spulenwicklung. Dabei werden die Vorteile der bekannten elektrotechnischen Spule bzw. Spulenwicklung vollumfänglich aufrecht erhalten. Insbesondere wird der Aufwand für die Fertigung der erfindungsgemäßen elektrotechnischen Spule bzw. Spulenwicklung gegenüber demjenigen bei der bekannten Anordnung nicht erhöht. In den durch die gießtechnische und/oder umformtechnische Herstellung bedingten Grenzen können bei der erfindungsgemäß gestalteten elektrotechnischen Spule bzw. Spulenwicklung je nach Bedarf zwei oder mehrere Windungen in derselben Windungsebene angeordnet werden. So wird auf einfache Weise eine Vervielfachung der Windungszahl erreicht.

Bei der erfindungsgemäßen Ausgestaltung der elektrotechnischen Spule bzw. Spulenwicklung mit zwei oder mehreren Windungen in einer Windungsebene hat sich außerdem gezeigt, dass der unerwünschte Effekt einer Stromverdrängung, die insbesondere bei hoch drehenden Maschinen mit zunehmender Drehzahl und damit Frequenz der in diesem Maschinen fließenden Ströme auftritt, weiter verringert werden kann. Damit sind die erfindungsgemäßen Spulen bzw. Spulenwicklungen auch bei sogenannten Schnellläufern einsetzbar, bei denen ein Einsatz von Spulen bzw. Spulenwicklungen der bekannten Bauform aufgrund zu starker Stromverdrängung in den Windungen sich als nicht mehr möglich herausgestellt hat. Die erfindungsgemäßen Spulen bzw. Spulenwicklungen sind insbesondere vorteilhaft einsetzbar in kompakten Elektromotoren hoher Leistung für Hybridantriebe bei Elektrofahrzeugen.

Vorteilhafte Ausgestaltungen der Erfindung sind in den Unteransprüchen gekennzeichnet.

Gemäß einer bevorzugten Weiterbildung der erfindungsgemäßen Spule und/oder Spulenwicklung sind, soweit diese Spule und/oder Spulenwicklung mehrere Windungen in wenigstens zwei Windungsebenen umfasst, diejenigen der Windungen, die in einer ersten der Windungsebenen angeordnet sind, bezüglich einer Stromflussrichtung durch die Windungen aneinander anschließend zur Spulenachse hin gewickelt, und sind diejenigen der Windungen, die in einer der ersten der Windungsebenen unmittelbar benachbarten zweiten der Windungsebenen angeordnet sind, bezüglich derselben Stromflussrichtung durch die Windungen aneinander anschließend von der Spulenachse weg gewickelt.

Im einfachsten Fall wird dadurch eine Anordnung erhalten, in der in einer ersten Windungsebene die bezüglich der Stromflussrichtung erste Windung außen liegt und die zweite Windung innen liegt, betrachtet von der Spulenachse aus, und wobei in einer sich an die erste Windungsebene unmittelbar anschließenden zweiten Windungsebene die nächste, sich an die zweite Windung der ersten Windungsebene in der Stromflussrichtung anschließende erste Windung der zweiten Windungsebene innen und die zweite Windung außen liegt. Bei einer Spulenwicklung mit z.B. drei Windungen in jeder Windungsebene sind die Windungen in der ersten Windungsebene in der Reihenfolge außen, mittig, innen angeordnet und in der sich anschließenden zweiten Windungsebene in der Reihenfolge innen, mittig, außen. Diese Reihenfolge der Windungen in den einzelnen Windungsebenen wiederholt sich entsprechend bei einer elektrotechnischen Spule bzw. Spulenwicklung mit mehr als zwei Windungsebenen; z.B. liegt im obigen, entsprechend erweiterten einfachsten Fall in einer dritten Windungsebene die erste Windung wieder außen und die zweite Windung innen, in einer vierten Windungsebene die erste Windung innen und die zweite Windung außen, usw. In gleicher Weise sind elektrotechnische Spulen bzw. Spulenwicklungen mit vier oder mehr Windungen in jeder Windungsebene herstellbar.

In einer vorteilhaften Abwandlung können erfindungsgemäß ausgestaltete elektrotechnische Spulen bzw. Spulenwicklungen in unterschiedlichen Windungsebenen auch unterschiedliche Anzahlen im Wesentlichen konzentrisch ineinander angeordneter Windungen aufweisen. Dadurch können von Fall zu Fall z.B. gießtechnisch günstigere Querschnittsformen der Windungen erhalten oder kann der Füllfaktor erhöht werden. Eine entsprechende Gestaltung ist auch durch rein umformtechnische Herstellungsschritte erzielbar, z.B. durch Biegen, Pressen, Schmieden, Walzen oder dergleichen.

Bei den vorbeschriebenen Gestaltungen der erfindungsgemäßen elektrotechnischen Spulen bzw. Spulenwicklungen sind die Windungen in jedem Fall derart geführt und sind insbesondere Übergangsbereiche zwischen den einzelnen Windungen derart ausgestaltet, dass das Zusammenpressen der Spulenwicklungen ermöglicht ist. Vorteilhaft stimmen dabei die Winkelrichtungen aller Windungen überein. Dabei wird als Wickelrichtung die Richtung bezeichnet, in der die Windungen in der gemeinsamen Stromflussrichtung der Spulenwicklung bzw. Spule betrachtet die Spulenachse umrunden bzw. umschlingen.

Nach einer weiteren bevorzugten Ausgestaltung ist die erfindungsgemäße elektrotechnische Spule und/oder Spulenwicklung gekennzeichnet durch einen einstückigen Aufbau mit einem alle Windungen gemeinsam bildenden Gussteil. Alle Windungen der gesamten Spule bzw. Spulenwicklung sind somit in einem einzigen Gießvorgang in einer gemeinsamen Gussform hergestellt. Die Fertigung gestaltet sich dadurch aufgrund einer geringen Zahl von Herstellungsschritten einfach, schnell und kostengünstig. Vorteilhaft ist diese Ausgestaltung der erfindungsgemäßen elektrotechnischen Spule bzw. Spulenwicklung vor allem für kleine Spulen bzw. Spulenwicklungen mit einer begrenzten Anzahl an Windungen.

In entsprechender Weise ist ein einstückiger Aufbau auch mit einem alle Windungen gemeinsam bildenden Umformteil, insbesondere Walz-, Biege-, Schmiede oder Pressteil, erzielbar, wodurch ebenfalls eine einfache und kostengünstige Herstellung ermöglicht wird.

In einer anderen bevorzugten Ausgestaltung weist die erfindungsgemäße Spule und/oder Spulenwicklung einen mehrstückigen Aufbau mit wenigstens zwei je einen Teil aller Windungen der Spule und/oder Spulenwicklung bildenden Gussteilen auf. Besonders bevorzugt sind diese Gussteile zumindest im Wesentlichen übereinstimmend gestaltet. Es wird dann zur Herstellung der einzelnen Gussteile im Wesentlichen lediglich ein Gussmodell bzw. eine Gussform benötigt oder es lassen sich die unterschiedlichen Modelle bzw. Gussformen mit allenfalls geringen, einfachen Abwandlungen schnell und kostengünstig aus einem gemeinsam verwendbaren Modell, einem sogenannten Basismuster, erzeugen. Auch wenn dies aus dem Grunde, dass die Windungen der einzelnen Gussteile unterschiedlich zu dimensionieren sind, im besonderen Fall nicht möglich ist, bleibt der Vorteil bestehen, dass die einzelnen, nun unterschiedlichen Gussteile jedes für sich einfach aufgebaut und damit kostengünstig herstellbar sind.

Bei einem Aufbau der erfindungsgemäßen elektrotechnischen Spule bzw. Spulenwicklung aus mehreren einzelnen Gussteilen werden diese zur Herstellung der Spule bzw. Spulenwicklung aneinandergefügt bzw. aneinandergereiht. Dabei werden die offenen Windungsenden der ersten bzw. letzten Windungen der einzelnen Gussteile in der Folge der Aneinanderreihung miteinander verbunden, bevorzugt durch Verschweißung, Lötung oder eine vergleichbare Verbindungsart.

Nach einer anderen vorteilhaften Ausführungsform der erfindungsgemäßen Spule und/oder Spulenwicklung sind im Einbauzustand aneinandergrenzende Windungen mit ihrer Querschnittskontur aneinander angepasst. Mit der Querschnittskontur ist dabei eine Berandung einer im Wesentlichen rechtwinklig zur der Stromflussrichtung durch die Windungen entsprechenden Längsrichtung des die Windungen bildenden elektrischen Leiters ausgerichteten Querschnittsfläche der Windungen bezeichnet. Durch diese Ausgestaltung grenzen die einzelnen Windungen wenigstens weitgehend formschlüssig aneinander, so dass sich für den beschriebenen Füllfaktor der Spule bzw. Spulenwicklung ein hoher Wert ergibt.

Gemäß einer anderen bevorzugten Ausgestaltung der erfindungsgemäßen Spule und/oder Spulenwicklung, in der diese zum Einbau in einen Einbauraum vorgesehen ist, ist die Spule und/oder Spulenwicklung mit ihrer Querschnittskontur einer Kontur des Einbauraumes angepasst. Mit der Querschnittskontur der Spule bzw. der Spulenwicklung ist in diesem Zusammenhang eine Berandung einer der Stromflussrichtung durch die Windungen entsprechenden, im Wesentlichen rechtwinklig zur Längsrichtung des die Windungen der Spule bzw. Spulenwicklung bildenden elektrischen Leiters ausgerichteten Querschnittsfläche der gesamten Spule bzw. Spulenwicklung bezeichnet. Ein Einbauraum in diesem Zusammenhang ist z.B. eine einen Wickelraum für die Spule bzw. Spulenwicklung bildende Nut im Stator einer elektrischen Maschine oder dergleichen. Auch durch diese Ausgestaltung wird ein hoher Füllfaktor erzielt.

Bei einer weiteren bevorzugten Ausführungsform der erfindungsgemäßen Spule und/oder Spulenwicklung weist die Querschnittskontur der Windungen in Richtung der Windungsebenen eine größere Abmessung auf als in Richtung der Spulenachse. Dabei haben die Windungen einen flachen, bevorzugt im Wesentlichen rechteckförmigen Querschnitt. Vorzugsweise weist die Querschnittskontur der Windungen in Richtung der Windungsebenen eine wenigstens doppelt so große Abmessung auf wie in Richtung der Spulenachse. Für die dabei kleinere der Abmessung der Querschnittskontur, d.h. für die Abmessung in Richtung der Spulenachse, sind dabei durch das zur Herstellung der Spulenwicklung verwendete Gussverfahren bedingte Mindestwerte zu beachten.

Die oben genannte Aufgabe wird weiterhin bei einem Verfahren zur Herstellung einer elektrotechnischen Spule und/oder Spulenwicklung der vorbeschriebenen Art dadurch gelöst, dass in einem ersten Herstellungsschritt die Spulenwicklung als ein alle Windungen gemeinsam bildendes Gussteil oder als eine Mehrzahl je einen Teil aller Windungen der Spule und/oder Spulenwicklung bildender Gussteile in einem Fertigungszustand aus einem elektrisch leitenden Werkstoff gegossen wird, wobei in diesem Fertigungszustand zur Bildung von Zwischenräumen für die Gestaltung einer Gussform die einzelnen Windungen je eines der Gussteile unterschiedliche Positionen zueinander annehmen, die auf voneinander entlang der Spulenachse getrennte Wicklungsebenen auseinandergezogen sind, und wobei in einem nachfolgenden Herstellungsschritt das Gussteil bzw. die Gussteile in Richtung der Spulenachse zusammen gepresst werden, so dass die Windungen ihre Position im Einbauzustand annehmen.

Wie vorstehend erwähnt, lehnt sich das erfindungsgemäße Verfahren, soweit es eine gießtechnische Herstellung der beschriebenen Spulen bzw. Spulenwicklungen betrifft, an das aus der Druckschrift EP 2 387 135 A2 bekannte und dort im Detail beschriebene Herstellungsverfahren an. Dabei werden die Spulen bzw. Spulenwicklungen in einem Fertigungszustand gegossen, in dem die einzelnen Windungen so weit in Richtung der Spulenachse auseinandergezogen sind, dass für die Spulenwicklung eine Gussform mit ausreichend dimensionierten Wänden herstellbar ist. Um eine späteres Umformen der Spulen bzw. Spulenwicklungen aus dem Fertigungszustand in den Einbauzustand möglichst gering zu halten, werden die Wände der Gussform möglichst dünn ausgelegt. Nach dem Gießen und gegebenenfalls weiteren Bearbeitungsschritten erfolgt das Umformen der Spule bzw. der Spulenwicklung in den Einbauzustand durch Zusammenpressen. Das erfindungsgemäße Verfahren berücksichtigt zusätzlich die Lage der in je einer der Windungsebenen im Einbauzustand nebeneinander liegenden Windungen im Fertigungszustand. Im Fertigungszustand müssen nämlich diese Windungen in verschiedene Windungsebenen auseinandergezogen liegen, um die Ausformbarkeit des Gussteils bzw. der Gussteile zu gewährleisten. Beim Vorgang des Umformens werden dann die bezeichneten, ineinander zu liegen kommenden Windungen in Ihre gemeinsam einzunehmende Windungsebene gepresst.

Die oben genannte Aufgabe wird außerdem bei einem Verfahren zur Herstellung einer elektrotechnischen Spule und/oder Spulenwicklung der vorbeschriebenen Art dadurch gelöst, dass in einem ersten Herstellungsschritt die Spulenwicklung als ein alle Windungen gemeinsam bildendes Umformteil oder als eine Mehrzahl je einen Teil aller Windungen der Spule und/oder Spulenwicklung bildender Umformteile in einem Fertigungszustand aus einem elektrisch leitenden Werkstoff wenigstens weitgehend durch umformtechnische Herstellungsverfahren gebildet wird, wobei in diesem Fertigungszustand zur Bildung von Zwischenräumen die einzelnen Windungen je eines der Umformteile unterschiedliche Positionen zueinander annehmen, die auf voneinander entlang der Spulenachse getrennte Wicklungsebenen auseinandergezogen sind, und wobei in einem nachfolgenden Herstellungsschritt das Umformteil bzw. die Umformteile in Richtung der Spulenachse zusammengepresst werden, so dass die Windungen ihre Position im Einbauzustand annehmen. Auch bei der umformtechnischen Herstellung der Spule und/oder Spulenwicklung ist es vorteilhaft, im ersten Herstellungsschritt Zwischenräume zwischen den einzelnen Windungen vorzusehen, da dies den Einsatz von Umformwerkzeugen sowie - wie auch bei der gießtechnischen Herstellung - ein Aufbringen eines elektrischen Isoliermaterials auf die Oberflächen der Leiter erleichtert, und erst im nachfolgenden Herstellungsschritt den Einbauzustand herzustellen.

Durch die beschriebene Ausgestaltung des erfindungsgemäßen Verfahrens wird insgesamt eine einfache und kostengünstige Fertigung erzielt. Das Verfahren beruht dabei auf einer an sich bekannten Fertigungstechnik, nämlich der Gießtechnik und der anschließenden Behandlung der so erzeugten Gussteile, bzw. auf der Umformtechnik. Vorteilhaft sind bei der Ausführung des Verfahrens zur Herstellung einer erfindungsgemäßen Spule bzw. Spulenwicklung keine zusätzlichen Verfahrensschritte auszuführen; lediglich die räumliche Gestaltung der Gussteile für den Fertigungszustand ist bei der Herstellung der erforderlichen Gussmodelle zu beachten, bzw. ist die oben beschriebene Spulenvorgeometrie entsprechend durch Umformverfahren zu bilden.

Die eingangs genannte Aufgabe wird schließlich bei einem elektrischen Gerät der eingangs genannten Art gelöst durch eine gießtechnisch und/oder umformtechnisch hergestellte elektrotechnische Spule und/oder Spulenwicklung der vorgeschriebenen Art oder durch eine elektrotechnische Spule und/oder Spulenwicklung, die nach den Ausbildungen des vorbeschriebenen Verfahrens hergestellt ist. Ein derartiges elektrisches Gerät ist insbesondere ein Elektromotor, bevorzugt ein Synchronmotor. Insbesondere bevorzugt ist ein derartiges elektrisches Gerät ein solcher Motor für einen Einsatz in einem Elektrofahrzeug. Die erfindungsgemäßen elektrotechnischen Spulen und/oder Spulenwicklungen sind darüber hinaus z.B. auch einsetzbar in Elektromagneten wie etwa in Hubmagneten oder dergleichen. Diese elektrischen Geräte zeichnen sich durch die Verwendung der erfindungsgemäßen Spulen bzw. Spulenwicklungen durch einen hohen Wirkungsgrad und eine kompakte Bauform aus.

### Kurze Beschreibung der Zeichnungen

Ausführungsbeispiele der Erfindung sind in der Zeichnung dargestellt und werden im nachfolgenden näher beschrieben. Dabei sind übereinstimmende Elemente mit denselben Bezugszeichen versehen. Es zeigen:
- Figur 1: ein erstes Ausführungsbeispiel für eine erfindungsgemäße Spule bzw. Spulenwicklung im Einbauzustand,
- Figur 2: das erste Ausführungsbeispiel einer erfindungsgemäßen Spule bzw. Spulenwicklung gemäß Figur 1 im Fertigungszustand,
- Figur 3: ein zweites Ausführungsbeispiel für eine erfindungsgemäße Spule bzw. Spulenwicklung im Einbauzustand, wobei dieses Ausführungsbeispiel ein Beispiel für ein sogenanntes Basismuster darstellt,
- Figur 4: das als Beispiel für ein Basismuster dienende zweite Ausführungsbeispiel einer erfindungsgemäßen Spule bzw. Spulenwicklung nach Figur 3 im Fertigungszustand,
- Figur 5: eine Darstellung des zweiten Ausführungsbeispiels für eine erfindungsgemäße Spule bzw. Spulenwicklung in getrennten Abbildungen a) bis d) für vier einzelne von der Spule bzw. Spulenwicklung umfasste Windungsebenen,
- Figur 6: eine Detailansicht des zweiten Ausführungsbeispiels für eine erfindungsgemäße Spule bzw. Spulenwicklung im Fertigungszustand, wobei insbesondere Übergänge zwischen einzelnen Windungen innerhalb der einzelnen Windungsebenen und zwischen benachbarten Windungsebenen dargestellt sind,
- Figur 7: ein drittes Ausführungsbeispiel für eine erfindungsgemäße Spule bzw. Spulenwicklung im Einbauzustand, wobei dieses Ausführungsbeispiel ein Beispiel für eine aus zwei sogenannten Basismustern zusammengesetzte, erfindungsgemäße Spule bzw. Spulenwicklung darstellt,
- Figur 8: das als Beispiel für eine aus zwei sogenannten Basismustern zusammengesetzte, erfindungsgemäße Spule bzw. Spulenwicklung dienende dritte Ausführungsbeispiel einer erfindungsgemäßen Spule bzw. Spulenwicklung nach Figur 7 im Fertigungszustand,
- Figur 9: ein viertes Ausführungsbeispiel für eine erfindungsgemäße Spule bzw. Spulenwicklung im Einbauzustand, wobei dieses Ausführungsbeispiel ein Beispiel für eine aus drei sogenannten Basismustern zusammengesetzte, erfindungsgemäße Spule bzw. Spulenwicklung darstellt, und
- Figur 10: das als Beispiel für eine aus drei sogenannten Basismustern zusammengesetzte, erfindungsgemäße Spule bzw. Spulenwicklung dienende vierte Ausführungsbeispiel einer erfindungsgemäßen Spule bzw. Spulenwicklung nach Figur 9 im Fertigungszustand.

Obwohl in der nachfolgenden Beschreibung einer bevorzugten Ausführungsform der Erfindung lediglich auf eine gießtechnisch hergestellte Spule bzw. Spulenwicklung abgehoben ist, gelten diese Ausführungen sinngemäß auch für teilweise oder vollständig umformtechnisch hergestellte Spulen bzw. Spulenwicklungen. Auch lassen sich gießtechnische und umformtechnische Fertigungsschritte in unterschiedlicher Weise kombinieren, indem z.B. eine Vorform der herzustellenden Spule bzw. Spulenwicklung geißtechnisch hergestellt wird und sich umformtechnische Herstellungsschritte anschließen, um die Spule bzw. Spulenwicklung in den Fertigungszustand zu bringen.

### Bevorzugte Ausführungsform der Erfindung

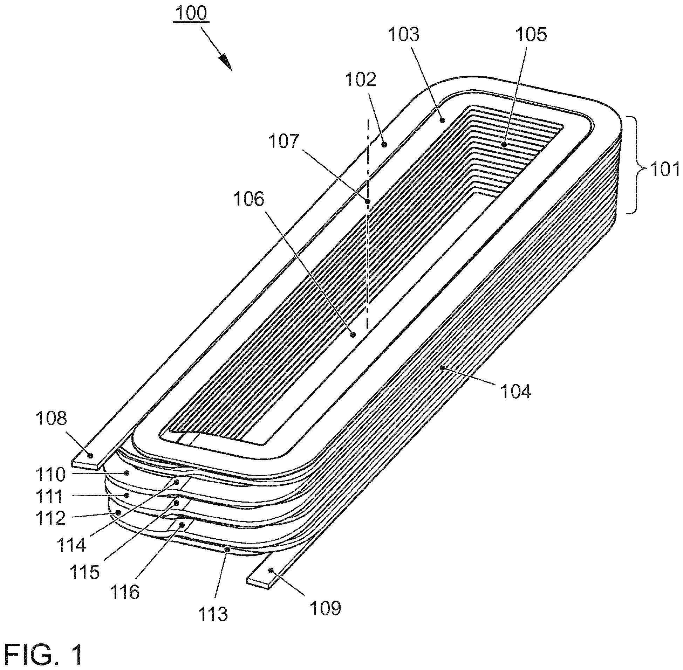

In Figur 1 ist mit dem Bezugszeichen 100 ein erstes Ausführungsbeispiel für eine erfindungsgemäße Spule bzw. Spulenwicklung im Einbauzustand bezeichnet, in dem die Spule bzw. Spulenwicklung 100 mit ihren Windungen in eine dichtestmögliche Lage zueinander zusammengepresst ist. Die Spule bzw. Spulenwicklung 100 weist in jeder Windungsebene zwei im Wesentlichen konzentrisch ineinander liegende Windungen auf. Die Spule bzw. Spulenwicklung 100 umfasst dabei eine gerade Anzahl von Windungsebenen 101, in diesem Fall 16 Windungsebenen 101. In der Darstellung der Figur 1 sind der Übersichtlichkeit halber nur die beiden Windungen in der obersten Windungsebene mit den Bezugszeichen 102 für eine außenliegende Windung und 103 für eine sich in Stromflussrichtung der Spule bzw. Spulenwicklung 100 an die außenliegende Windung 102 anschließende innenliegende Windung. Außenliegende Windungen 104 und innenliegende Windungen 105 der weiteren Windungsebenen liegen in der Spule bzw. Spulenwicklung 100 jeweils unterhalb der außenliegenden Windung 102 bzw. der innenliegenden Windung 103 in der obersten Windungsebene. Ein von den innenliegenden Windungen 103 umgebener Raumbereich 106 ist zur Aufnahme eines nicht dargestellten Spulenkerns, z.B. eines magnetisch leitenden Statorzahns eines Elektromotors, ausgebildet.

Die Windungsebenen 101 sind bei der in Figur 1 dargestellten Spule bzw. Spulenwicklung 100 senkrecht zu einer allen Windungen 102, 103, 104, 105 gemeinsamen Spulenachse 107 stehend angeordnet und liegen damit parallel zueinander. Die Spulenachse 107 bezeichnet eine räumliche Mittelachse der Spule bzw. Spulenwicklung 100. Die Windungen 102, 103, die in der ersten, d.h. obersten, der Windungsebenen 101 angeordnet sind, sind bezüglich einer Stromflussrichtung durch alle Windungen 102, 103, 104, 105 aneinander anschließend zur Spulenachse 107 hin gewickelt, d.h. von außen nach innen. In einer der ersten der Windungsebenen 101 unmittelbar benachbarten zweiten der Windungsebenen 101, also der zweitobersten der Windungsebenen 101, sind die Windungen bezüglich derselben Stromflussrichtung durch die Windungen aneinander anschließend von der Spulenachse 107 weg gewickelt, d.h. von innen nach außen. In der dritten der Windungsebenen 101 von oben sind die Windungen wieder von außen nach innen und in der vierten der Windungsebenen 101 von oben von innen nach außen gewickelt, usw. Die Wickelrichtungen aller Windungen 102, 103, 104, 105, also die Umlaufrichtung der Windungen 102, 103, 104, 105 um die Spulenachse 107 stimmen dabei überein.

In Figur 1 ist ferner ein erstes elektrisches Anschlusselement 108 am Anfang der äußeren, d.h. ersten Windung 102 der ersten der Windungsebenen 101 angeschlossen. Ein zweites elektrisches Anschlusselement 109 ist am Ende der letzten und äußeren Windung in der letzten der Windungsebenen 101 angeschlossen. Bevorzugt sind die elektrischen Anschlusselemente 108, 109 bei der Fertigung der Spule bzw. Spulenwicklung 100 an die betreffenden Windungen im selben Fertigungsschritt angegossen.

Die Spule bzw. Spulenwicklung 100 nach Figur 1 zeigt ferner einen mehrstückigen Aufbau mit vier je einen Teil aller Windungen der Spule bzw. Spulenwicklung 100 bildenden Gussteilen. Insbesondere sind die Windungen der obersten vier der Windungsebenen 101 in einem ersten Gussteil 110, die nächsten vier der Windungsebenen 101 in einem zweiten Gussteil 111, die dritten vier der Windungsebenen 101 in einem dritten Gussteil 112 und die untersten vier der Windungsebenen 101 in einem vierten Gussteil 113 zusammengefasst. Die Gussteile 110, 111, 112, 113 sind an Verbindungsstellen 114, 115, 116 aneinandergereiht miteinander verbunden, bevorzugt durch Verschweißung. Insbesondere ist die letzte Windung des ersten Gussteils 110 mit der ersten Windung des zweiten Gussteils 111 an einer ersten Verbindungsstelle 114 verbunden. Entsprechend ist die letzte Windung des zweiten Gussteils 111 an einer zweiten Verbindungsstelle 115 mit der ersten Windung des dritten Gussteils 112 verbunden, und die letzte Windung des dritten Gussteils 112 ist an einer dritten Verbindungsstelle 116 mit der ersten Windung des vierten Gussteils 113 verbunden. Die Verbindungsstellen 114, 115, 116 befinden sich in diesem Ausführungsbeispiel vor den Bögen der außenliegenden Windungen 102, 104 an einer in Figur 1 im Vordergrund dargestellten Schmalseite der Spule bzw. Spulenwicklung 100 innerhalb eines dort befindlichen Verschaltungsraumes, in dem auch die elektrischen Anschlusselemente 108, 109 angeordnet sind. Dadurch, dass sich der Verschaltungsraum vor den Bögen der außenliegenden Windungen 102, 104 befindet, sind die Verbindungsstellen 114, 115, 116 für eine Verschweißung leicht zugänglich. Bis auf eine veränderte Ausgestaltung der elektrischen Anschlusselemente 108, 109 gleicht die Spule bzw. Spulenwicklung 100 in ihrem Aufbau den nachfolgend beschriebenen Ausführungsbeispielen für eine aus einer Anzahl sogenannter Basismuster zusammengesetzte Spule bzw. Spulenwicklung.

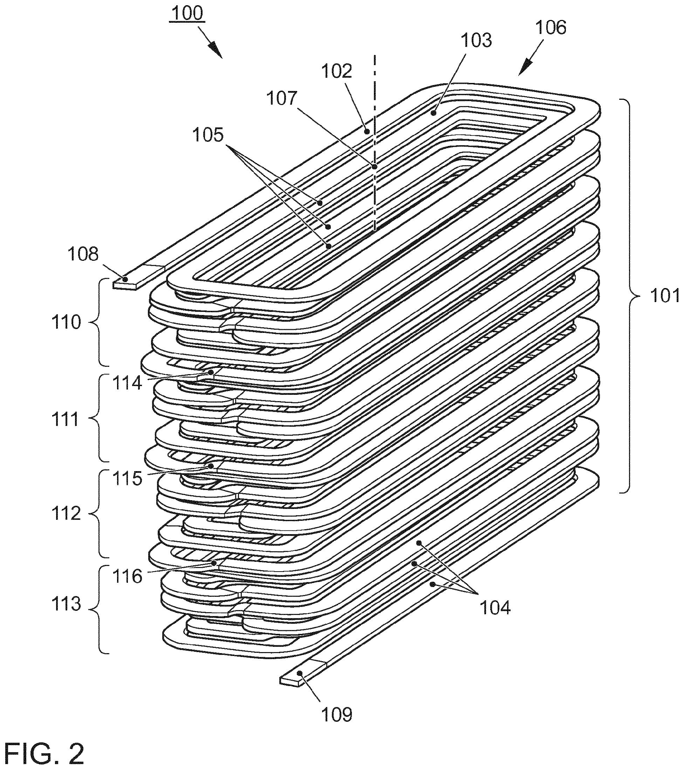

Figur 2 zeigt das vorstehend beschriebene erste Ausführungsbeispiel der erfindungsgemäßen Spule bzw. Spulenwicklung 100 gemäß Figur 1 im Fertigungszustand, in dem sämtliche Windungen auf unterschiedliche Windungsebenen auseinandergezogen sind, auch diejenigen, die im Einbauzustand gemäß Figur 1 in einer gemeinsamen der Windungsebenen 101 zu liegen kommen.

In der Spule bzw. Spulenwicklung 100 des ersten Ausführungsbeispiels weist die Querschnittskontur der Windungen 102, 103, 104, 105 in Richtung der Windungsebenen 101 eine größere Abmessung auf als in Richtung der Spulenachse 107. Die Windungen 102, 103, 104, 105 haben einen flachen, rechteckförmigen Querschnitt; vorzugsweise ist die Abmessung des Querschnitts in Richtung der Windungsebenen 101 wenigstens doppelt so groß wie in Richtung der Spulenachse 107.

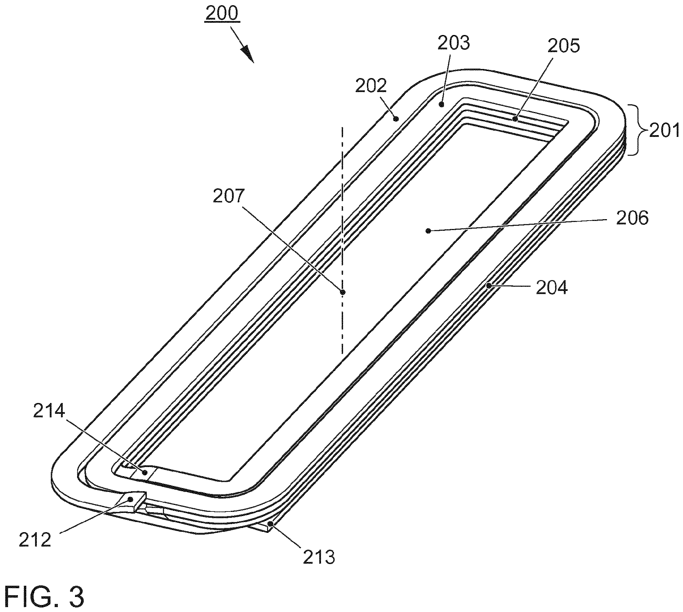

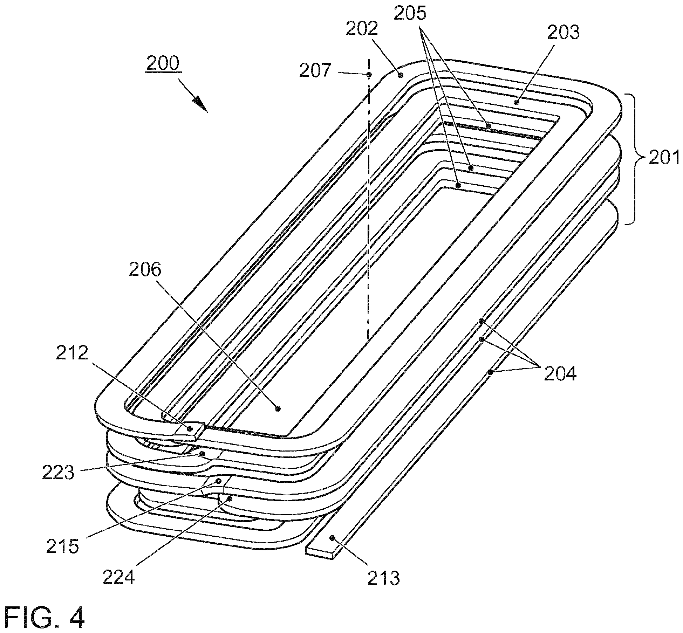

In Figur 3 ist ein mit dem Bezugszeichen 200 bezeichnetes zweites Ausführungsbeispiel für eine erfindungsgemäße Spule bzw. Spulenwicklung im Einbauzustand wiedergegeben, wobei dieses Ausführungsbeispiel ein sogenanntes Basismuster darstellt, welches dafür vorgesehen ist, durch Aneinanderreihung mehrerer Exemplare eine umfangreichere Spule bzw. Spulenwicklung zu bilden. Entsprechend der Darstellungsweise der Figur 2 zeigt die Figur 4 das Basismuster 200 des zweiten Ausführungsbeispiels nach Figur 3 im Fertigungszustand.

Das Basismuster 200 nach Figur 3 umfasst insgesamt acht Windungen gleicher Wickelrichtung in vier Windungsebenen 201. In Wickelrichtung beginnend mit einer außenliegenden Windung 202 in der obersten Windungsebene schließt sich auch hier eine zweite, innenliegende Windung 203 ebenfalls in der obersten Windungsebene an. An diese zweite Windung 203 schließen sich weitere drei außenliegende Windungen 204 und weitere drei innenliegende Windungen 205 an, beginnend mit einer innenliegenden Windung, an die sich eine außenliegende Windung anschließt, beide in einer zweiten der Windungsebenen 201, usw. Dabei umschließen die Windungen 202, 203, 204, 205 einen Raumbereich 206 für einen nicht dargestellten Spulenkern. Die Mittelachse des Raumbereichs 206 wird durch eine Spulenachse 207 gebildet, die senkrecht auf allen Windungsebenen 201 steht.

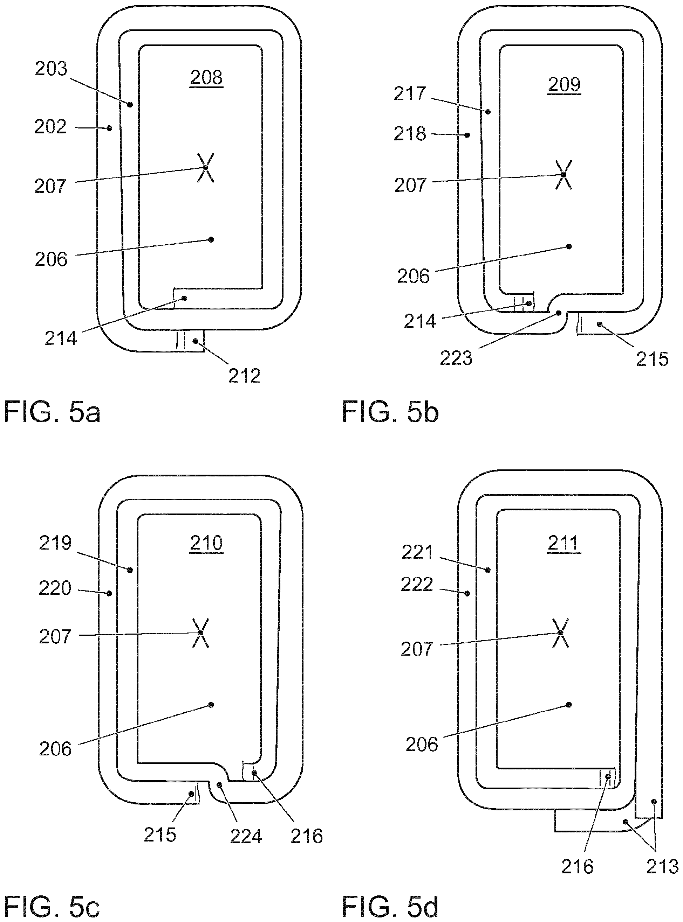

Figur 5 zeigt eine Darstellung des Basismusters 200 nach dem zweiten Ausführungsbeispiel in getrennten Abbildungen a) bis d) für die vier einzelnen von dem Basismuster 200 umfassten Windungsebenen 201. Darin ist die oberste, erste Windungsebene 208 in Figur 5a) abgebildet, die zweite Windungsebene 209 ist in Figur 5b) gezeigt, die dritte Windungsebene 210 ist in Figur 5c) dargestellt und die vierte Windungsebene 211 ist in Figur 5d) wiedergegeben. Wie in den vorigen Figuren ist auch in Figur 5 die Wickelrichtung im Uhrzeigersinn angenommen.

In der ersten Windungsebene 208 beginnt die oberste, erste außenliegende Windung 202 an einem ersten Verbindungselement 212, mit dem das Basismuster 200 mit einem der ersten Windungsebene 208 benachbart anzuordnenden Basismuster gleicher Bauart elektrisch verbindbar ist. Die erste Windung 202 umrundet den Raumbereich 206 in der ersten Windungsebene 208 einmal und geht dann mit einem geradlinigen Verlauf in die oberste, erste innenliegende Windung 203 über. Am Ende der obersten, ersten innenliegenden Windung 203 befindet sich eine erste Übergangsstelle 214, in der sich an die oberste, erste innenliegende Windung 203 eine zweite innenliegende Windung in der zweiten Windungsebene 209 anschließt. Diese zweite innenliegende Windung ist eine der innenliegenden Windungen 205 der weiteren der Windungsebenen 201 aus Figur 3 und Figur 4 und in Figur 5b) mit dem Bezugszeichen 217 bezeichnet. An die zweite innenliegende Windung 217 schließt sich mit einer ersten Verschwenkung 223 eine zweite außenliegende Windung 218 an. Da beide Windungen 217,218 in derselben zweiten Windungsebene 209 liegen, gilt dies auch für die erste Verschwenkung 223.

Am Ende der zweiten außenliegenden Windung 218 ist diese an einer zweiten Übergangsstelle 215 an eine dritte außenliegende Windung 220 in der dritten Windungsebene 210 angeschlossen. Dabei ist die erste Verschwenkung 223 gegenüber der zweiten Übergangsstelle 215 parallel zu den Windungsebenen 208 bis 211 versetzt angeordnet, wodurch die einzelnen an diese erste Verschwenkung 223 bzw. zweite Übergangsstelle 215 anschließenden Windungen 203, 217, 218, 220 plan aufeinanderliegen.

In entsprechender Weise schließt sich an die dritte außenliegende Windung 220 in der dritten Windungsebene 210 wie in Figur 5c) dargestellt über eine zweite Verschwenkung 224 eine dritte innenliegende Windung 219 an. Diese geht über eine dritte Übergangsstelle 216 in eine vierte innenliegende Windung 221 in der vierten Windungsebene 211 über, die in Figur 5d) dargestellt ist. An die vierte innenliegende Windung 221 schließt sich mit einem geradlinigen Verlauf eine vierte außenliegende Windung 222 an, die in einem zweiten Verbindungselement 213 endet, mit dem das Basismuster 200 mit einem der vierten Windungsebene 211 benachbart anzuordnenden weiteren Basismuster gleicher Bauart elektrisch verbindbar ist. Für das zweite Verbindungselement 213 sind in Figur 5c) wahlweise zwei Ausgestaltungen skizziert, von denen eine der Darstellung gemäß den Figuren 3 und 4 entspricht und die zweite für einen Anschluss eines weiteren, gleich ausgestalteten Basismusters eingerichtet ist.

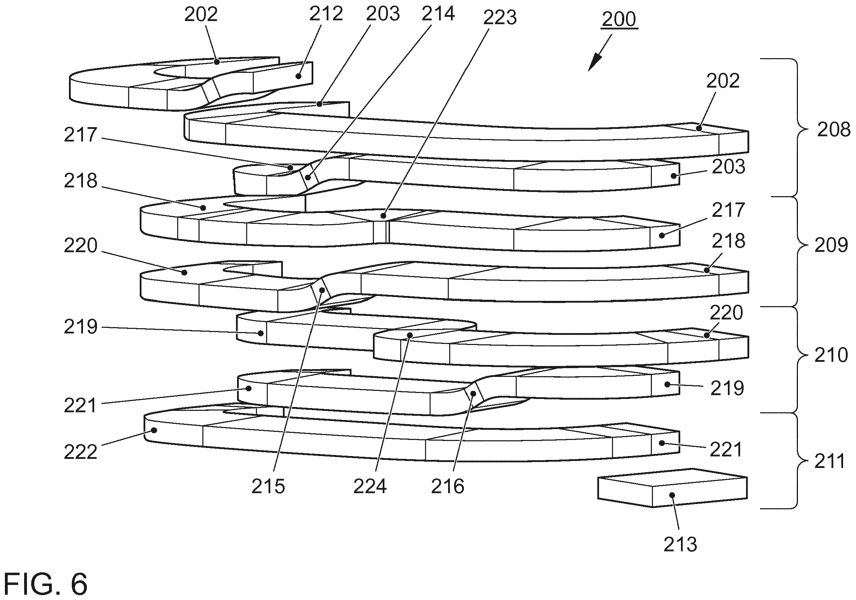

Figur 6 zeigt eine Detailansicht des zweiten Ausführungsbeispiels nach den Figuren 3 bis 5 im Fertigungszustand, wobei insbesondere die Übergänge zwischen den einzelnen Windungen innerhalb der einzelnen Windungsebenen und zwischen benachbarten Windungsebenen wie im vorstehenden zu Figur 5 beschrieben dargestellt sind. In dem hier dargestellten Fertigungszustand befinden sich alle Windungen und auch die Übergänge zwischen den einzelnen Windungen auf unterschiedlichen Windungsebenen.

Die Verbindungselemente 212, 213 befinden sich in diesem Ausführungsbeispiel vor den Bögen der außenliegenden Windungen 202, 204 an einer in den Figuren 3 und 4 im Vordergrund dargestellten Schmalseite der Spule bzw. Spulenwicklung 200 innerhalb eines dort befindlichen Verschaltungsraumes, vgl. dazu auch die Darstellung des zweiten Verbindungselements 213 nach Figur 5d). Dadurch, dass sich der Verschaltungsraum vor den Bögen der außenliegenden Windungen 202, 204 befindet, sind die Verbindungselemente 212, 213 für ein Anschließen, z.B. eine Verschweißung, leicht zugänglich.

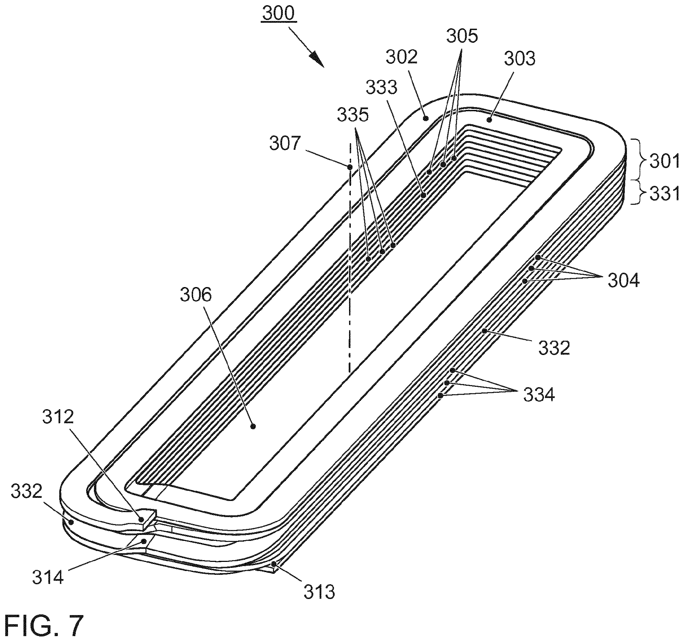

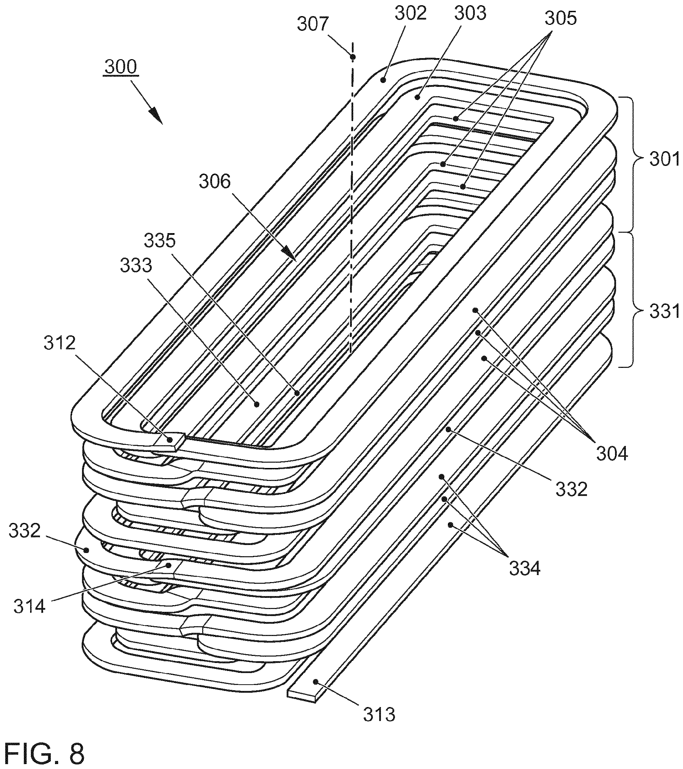

In Figur 7 ist als drittes Ausführungsbeispiel für eine erfindungsgemäße Spule bzw. Spulenwicklung eine durch Aneinanderreihung zweier Exemplare des Basismusters 200 gemäß dem zweiten Ausführungsbeispiel nach den Figuren 3 bis 6 zusammengesetzte Spule bzw. Spulenwicklung im Einbauzustand dargestellt und mit dem Bezugszeichen 300 bezeichnet. Entsprechend der Darstellungsweise der Figuren 2 und 4 zeigt die Figur 8 die aus den zwei Basismustern zusammengesetzte, erfindungsgemäße Spule bzw. Spulenwicklung 300 nach Figur 7 im Fertigungszustand.

Dem zum Aufbau verwendeten Basismuster 200 gemäß Figur 3 entsprechend umfasst die Spule bzw. Spulenwicklung 300 insgesamt zweimal acht Windungen gleicher Wickelrichtung in zweimal vier Windungsebenen, von denen die ersten vier Windungsebenen mit dem Bezugszeichen 301 und die zweiten vier Windungsebenen mit dem Bezugszeichen 331 bezeichnet sind.

In Wickelrichtung beginnt die Spule bzw. Spulenwicklung 300 mit dem die ersten vier Windungsebenen 301 umfassenden ersten der beiden Basismuster an einem ersten Verbindungselement 312, das einen Anfang einer außenliegenden Windung 302 in der obersten der ersten vier Windungsebenen 301 und damit eine externe Anschlussmöglichkeit für die Spule bzw. Spulenwicklung 300 darstellt. An die außenliegende Windung 302 in der obersten der ersten vier Windungsebenen 301 schließt sich eine zweite, innenliegende Windung 303 ebenfalls in der obersten Windungsebene an. An diese zweite Windung 303 schließen sich weitere drei außenliegende Windungen 304 und weitere drei innenliegende Windungen 305 an, beginnend mit einer innenliegenden Windung, an die sich eine außenliegende Windung anschließt, beide in einer zweiten der ersten vier Windungsebenen 301, usw. Dabei umschließen die Windungen 302, 303, 304, 305 einen Raumbereich 306 für einen nicht dargestellten Spulenkern. Die Mittelachse des Raumbereichs 306 wird durch eine Spulenachse 307 gebildet, die senkrecht auf allen Windungsebenen 301 steht.

Die letzte der außenliegenden Windungen 304 in der letzten der ersten vier Windungsebenen 301 ist über eine Verbindungsstelle 314 mit einer außenliegenden Windung 332 in der obersten der zweiten vier Windungsebenen 331 und damit mit der ersten Windung des zweiten Basismusters verbunden. Im weiteren Verlauf der Windungen des zweiten Basismusters schließt sich an die außenliegende Windung 332 in der obersten der zweiten vier Windungsebenen 331 eine zweite, innenliegende Windung 333 ebenfalls in der obersten Windungsebene der zweiten vier Windungsebenen 331 an. An diese zweite Windung 333 schließen sich im Verlauf der Windungen des zweiten Basismusters weitere drei außenliegende Windungen 334 und weitere drei innenliegende Windungen 335 an, beginnend mit einer innenliegenden Windung, an die sich eine außenliegende Windung anschließt, beide in einer zweiten der zweiten vier Windungsebenen 331, usw. Dabei umschließen die Windungen 332, 333, 334, 335 ebenfalls den Raumbereich 306.

In Wickelrichtung endet die Spule bzw. Spulenwicklung 300 mit dem die zweiten vier Windungsebenen 331 umfassenden zweiten Basismuster an einem zweiten Verbindungselement 313, das ein Ende der letzten der außenliegenden Windungen 334 in der untersten der zweiten vier Windungsebenen 331 und damit eine weitere externe Anschlussmöglichkeit für die Spule bzw. Spulenwicklung 300 darstellt.

Die Verbindungselemente 312 und bevorzugt auch 313 sowie die Verbindungsstelle 314 befinden sich auch in diesem Ausführungsbeispiel vor den Bögen der außenliegenden Windungen 302, 304, 332, 334 an einer in den Figuren 7 und 8 im Vordergrund dargestellten Schmalseite der Spule bzw. Spulenwicklung 300 innerhalb eines dort befindlichen Verschaltungsraumes und sind dadurch für ein Anschließen, z.B. eine Verschweißung, leicht zugänglich.

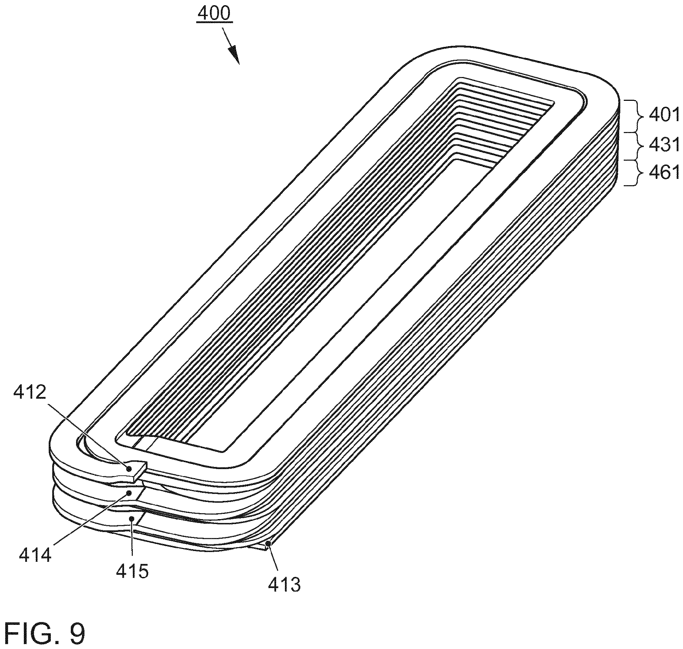

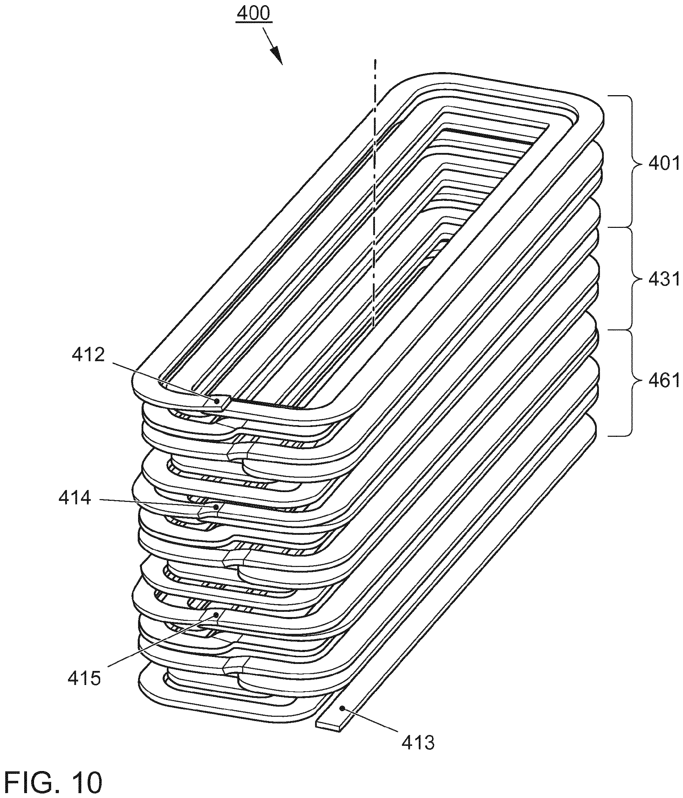

In Figur 9 ist als viertes Ausführungsbeispiel für eine erfindungsgemäße Spule bzw. Spulenwicklung eine durch Aneinanderreihung dreier Exemplare des Basismusters 200 gemäß dem zweiten Ausführungsbeispiel nach den Figuren 3 bis 6 zusammengesetzte Spule bzw. Spulenwicklung im Einbauzustand dargestellt und mit dem Bezugszeichen 400 bezeichnet. Entsprechend der Darstellungsweise der Figuren 2 und 4 zeigt die Figur 10 die aus den drei Basismustern zusammengesetzte, erfindungsgemäße Spule bzw. Spulenwicklung 400 nach Figur 9 im Fertigungszustand.

Dem zum Aufbau verwendeten Basismuster 200 gemäß Figur 3 entsprechend umfasst die Spule bzw. Spulenwicklung 400 insgesamt dreimal acht Windungen gleicher Wickelrichtung in dreimal vier Windungsebenen, von denen die ersten vier Windungsebenen mit dem Bezugszeichen 401, die zweiten vier Windungsebenen mit dem Bezugszeichen 431 und die dritten vier Windungsebenen mit dem Bezugszeichen 461 bezeichnet sind.

In Wickelrichtung beginnt die Spule bzw. Spulenwicklung 400 mit dem die ersten vier Windungsebenen 401 umfassenden ersten der drei Basismuster an einem ersten Verbindungselement 412, das einen Anfang der Windungen der ersten vier Windungsebenen 401 und damit eine externe Anschlussmöglichkeit für die Spule bzw. Spulenwicklung 400 darstellt. Die Windungen der ersten vier Windungsebenen 401 sind in einer mit den Figuren 3 und 4 übereinstimmenden Weise angeordnet und daher hier nicht näher beschrieben. Die letzte Windung in der letzten der ersten vier Windungsebenen 401 ist über eine erste Verbindungsstelle 414 mit einer ersten Windung in der obersten der zweiten vier Windungsebenen 431 und damit mit der ersten Windung des zweiten Basismusters verbunden. Die Windungen der zweiten vier Windungsebenen 431 sind in einer mit den Figuren 3 und 4 übereinstimmenden Weise angeordnet und daher ebenfalls nicht noch einmal beschrieben. In entsprechender Weise ist ferner die letzte Windung in der letzten der zweiten vier Windungsebenen 431 über eine zweite Verbindungsstelle 415 mit einer ersten Windung in der obersten der dritten vier Windungsebenen 461 und damit mit der ersten Windung des dritten Basismusters verbunden. Auch die Windungen der dritten vier Windungsebenen 461 sind in einer mit den Figuren 3 und 4 übereinstimmenden Weise angeordnet und nicht noch einmal beschrieben. Die Spule bzw. Spulenwicklung 400 endet mit dem die dritten vier Windungsebenen 461 umfassenden dritten Basismuster an einem zweiten Verbindungselement 413, das ein Ende der letzten der Windungen in der untersten der dritten vier Windungsebenen 461 und damit eine weitere externe Anschlussmöglichkeit für die Spule bzw. Spulenwicklung 400 darstellt.

Die Verbindungselemente 412 und bevorzugt auch 413 sowie die Verbindungsstellen 414, 415 befinden sich auch in diesem Ausführungsbeispiel wieder vor den Bögen der außenliegenden Windungen an einer in den Figuren 9 und 10 im Vordergrund dargestellten Schmalseite der Spule bzw. Spulenwicklung 400 innerhalb eines dort befindlichen Verschaltungsraumes und sind dadurch für ein Anschließen, z.B. eine Verschweißung, leicht zugänglich.

Für die Herstellung noch umfangreicherer Spulen bzw. Spulenwicklungen lassen sich in sehr einfacher Weise entsprechende, beliebige Anzahlen von Basismustern aneinanderreihen.

## Patentansprüche

1. Gießtechnisch hergestellte elektrotechnische Spule und/oder Spulenwicklung (100; 200; 300; 400), umfassend zwei oder mehrere Windungen (102-105; 202-205; 217-222; 302-305; 332-335), wobei zumindest weitgehend jede der Windungen (102-105; 202-205; 217-222; 302-305; 332-335) zumindest im Wesentlichen in einer dieser Windung zugeordneten Windungsebene (101; 201; 208-211; 301, 331; 401, 431, 461) angeordnet ist, wobei die Windungsebene (101; 201; 208-211; 301, 331; 401, 431, 461) wenigstens weitgehend senkrecht auf einer allen Windungen (102-105; 202-205; 217-222; 302-305; 332-335) wenigstens im wesentlichen gemeinsamen Spulenachse (107; 207; 307) steht, **dadurch gekennzeichnet dass** in einer oder mehreren der Windungsebenen (101; 201; 208-211; 301, 331; 401, 431, 461) wenigstens zwei Windungen (102-105; 202-205; 217-222; 302-305; 332-335) zumindest in einem Einbauzustand wenigstens im Wesentlichen konzentrisch ineinander angeordnet sind, wobei die Spule und/oder Spulenwicklung (200) einen einstückigen Aufbau mit einem alle Windungen (202-205; 217-222) gemeinsam bildenden Gussteil aufweist.

2. Spule und/oder Spulenwicklung (100; 200; 300; 400) nach Anspruch 1, umfassend mehrere Windungen (102-105; 202-205; 217-222; 302-305; 332-335) in wenigstens zwei Windungsebenen (101; 201; 208-211; 301, 331; 401, 431, 461),
**dadurch gekennzeichnet, dass**
diejenigen der Windungen (102-105; 202-205; 217-222; 302-305; 332-335), die in einer ersten der Windungsebenen (101; 201; 208-211; 301, 331; 401, 431, 461) angeordnet sind, bezüglich einer Stromflussrichtung durch die Windungen (102-105; 202-205; 217-222; 302-305; 332-335) aneinander anschließend zur Spulenachse (107; 207; 307) hin gewickelt sind, und dass
diejenigen der Windungen (102-105; 202-205; 217-222; 302-305; 332-335), die in einer der ersten der Windungsebenen (101; 201; 208-211; 301, 331; 401, 431, 461) unmittelbar benachbarten zweiten der Windungsebenen (101; 201; 208-211; 301, 331; 401, 431, 461) angeordnet sind, bezüglich derselben Stromflussrichtung durch die Windungen (102-105; 202-205; 217-222; 302-305; 332-335) aneinander anschließend von der Spulenachse (107; 207; 307) weg gewickelt sind.

3. Spule und/oder Spulenwicklung (100; 200; 300; 400) nach Anspruch 1 oder 2,
**dadurch gekennzeichnet, dass**
die Wickelrichtungen aller Windungen (102-105; 202-205; 217-222; 302-305; 332-335) übereinstimmen.

4. Spule und/oder Spulenwicklung (100; 200; 300; 400) nach einem oder mehreren der vorhergehenden Ansprüche,
**dadurch gekennzeichnet, dass**
im Einbauzustand aneinandergrenzende Windungen (102-105; 202-205; 217-222; 302-305; 332-335) mit ihrer Querschnittskontur aneinander angepasst sind.

5. Spule und/oder Spulenwicklung (100; 200; 300; 400) nach einem oder mehreren der vorhergehenden Ansprüche, vorgesehen zum Einbau in einen Einbauraum,
**dadurch gekennzeichnet, dass**
die Spule und/oder Spulenwicklung (100; 200; 300; 400) mit ihrer Querschnittskontur einer Kontur des Einbauraumes angepasst ist.

6. Spule und/oder Spulenwicklung (100; 200; 300; 400) nach Anspruch 4 oder 5,
**dadurch gekennzeichnet, dass**
die Querschnittskontur der Windungen (102-105; 202-205; 217-222; 302-305; 332-335) in Richtung der Windungsebenen (101; 201; 208-211; 301, 331; 401, 431, 461) eine größere Abmessung aufweist als in Richtung der Spulenachse (107; 207; 307).

7. Verfahren zur Herstellung einer elektrotechnischen Spule und/oder Spulenwicklung (100; 200; 300; 400) nach einem oder mehreren der vorhergehenden Ansprüche,
**dadurch gekennzeichnet, dass**
in einem ersten Herstellungsschritt die Spulenwicklung (100; 200; 300; 400) als ein alle Windungen (202-205; 217-222) gemeinsam bildendes Gussteil oder als eine Mehrzahl je einen Teil aller Windungen (102-105; 302-305; 332-335) der Spule und/oder Spulenwicklung (100; 200; 300; 400) bildender Gussteile (110-113) in einem Fertigungszustand aus einem elektrisch leitenden Werkstoff gegossen wird, wobei in diesem Fertigungszustand zur Bildung von Zwischenräumen für die Gestaltung einer Gussform die einzelnen Windungen (102-105; 202-205; 217-222; 302-305; 332-335) je eines der Gussteile (110-113) unterschiedliche Positionen zueinander annehmen, die auf voneinander entlang der Spulenachse (107; 207; 307) getrennte Wicklungsebenen auseinandergezogen sind, und wobei in einem nachfolgenden Herstellungsschritt das Gussteil bzw. die Gussteile (110-113) in Richtung der Spulenachse (107; 207; 307) zusammengepresst werden, so dass die Windungen (102-105; 202-205; 217-222; 302-305; 332-335) ihre Position im Einbauzustand annehmen.

8. Elektrisches Gerät,
**gekennzeichnet durch**
eine gießtechnisch hergestellte elektrotechnische Spule und/oder Spulenwicklung (100; 200; 300; 400) nach einem oder mehreren der Ansprüche 1 bis 6 oder eine elektrotechnische Spule und/oder Spulenwicklung (100; 200; 300; 400) hergestellt nach Anspruch 7.

## Claims

1. An electro-technical coil and/or coil winding (100; 200; 300; 400) produced by casting, comprising two or more turns (102-105; 202-205; 217-222; 302-305; 332-335), wherein at least to a large extent each of the turns (102-105; 202-205; 217-222; 302-305; 332-335) is arranged at least substantially in a turn plane (101; 201; 208-211; 301, 331; 401, 431, 461) associated with said turn, wherein the turn plane (101; 201; 208-211; 301, 331; 401, 431, 461) is at least to a large extent at right angles to a coil axis (107; 207; 307) that is at least substantially common to all turns (102-105; 202-205; 217-222; 302-305; 332-335), **characterized in that** in one or more of the turn planes (101; 201; 208-211; 301, 331; 401, 431, 461) at least two turns (102-105; 202-205; 217-222; 302-305; 332-335) in one or more of the turn planes (101; 201; 208-211; 301, 331; 401, 431, 461) are arranged at least substantially concentrically in one another in an installed state, wherein the coil and/or coil winding (200) has a one-piece structure with a cast part jointly forming all turns (202-205; 217-222).

2. The coil and/or coil winding (100; 200; 300; 400) according to Claim 1, comprising a plurality of turns (102-105; 202-205; 217-222; 302-305; 332-335) in at least two turn planes (101; 201; 208-211; 301, 331; 401, 431, 461),
**characterized in that**
those of the turns (102-105; 202-205; 217-222; 302-305; 332-335), which are arranged in a first of the turn planes (101; 201; 208-211; 301, 331; 401, 431, 461), with respect to a current flow direction through the turns (102-105; 202-205; 217-222; 302-305; 332-335) are subsequently wound to each other towards the coil axis (107; 207; 307), and that
those of the turns (102-105; 202-205; 217-222; 302-305; 332-335), which are arranged in one of the first of the turn planes (101; 201; 208-211; 301, 331; 401, 431, 461) immediately adjacent to second of the turn planes (101; 201; 208-211; 301, 331; 401, 431, 461), with respect to the same current flow direction are subsequently wound together away from the coil axis (107; 207; 307).

3. The coil and/or coil winding (100; 200; 300; 400) according to Claim 1 or 2,
**characterized in that**
the winding direction of all turns (102-105; 202-205; 217-222; 302-305; 332-335) match.

4. The coil and/or coil winding (100; 200; 300; 400) according to any one or more of the preceding claims,
**characterized in that**
turns (102-105; 202-205; 217-222; 302-305; 332-335) adjacent to one another in the installed state are adapted to one another with their cross-sectional contour.

5. The coil and/or coil winding (100; 200; 300; 400) according to any one or more of the preceding claims, provided for installation in an installation space,
**characterized in that**
the coil and/or coil winding (100; 200; 300; 400) is adapted with its cross-sectional contour to a contour of the installation space.

6. The coil and/or coil winding (100; 200; 300; 400) according to Claim 4 or 5, **characterized in that**
the cross-sectional contour of the turns (102-105; 202-205; 217-222; 302-305; 332-335) in the direction of the turn planes (101; 201; 208-211; 301, 331; 401, 431, 461) has a larger dimension than in the direction of the coil axis (107; 207; 307).

7. A method for producing an electro-technical coil and/or coil winding (100; 200; 300; 400) according to any one or more of the preceding claims,
**characterized in that**
in a first production step the coil winding (100; 200; 300; 400) is cast in a production state from an electrically conductive material as a cast part jointly forming all turns (202-205; 217-222) or as a plurality of cast parts (110-113) each forming one part of all turns (102-105; 202-205; 217-222; 302-305; 332-335) of the coil and/or coil winding (100, 200; 300; 400), wherein in said production state, in order to form intermediate spaces for shaping a casting mold, the individual turns (102-105; 202-205; 217-222; 302-305; 332-335) of each one of the cast parts (110-113) assume different positions relative to one another, which are pulled apart on turn planes separated from one another along the coil axis (107; 207; 307), and wherein in a subsequent production step the cast part or the cast parts (110-113) are pressed together in the direction of the coil axis (107; 207; 307), so that the turns (102-105; 202-205; 217-222; 302-305; 332-335) assume their position in the installed state.

8. An electrical device,
**characterized by**
an electro-technical coil and/or coil winding (100; 300; 300; 400) produced by casting according to one or more of Claims 1 to 6 or an electro-technical coil and/or coil winding (100; 200; 300; 400) produced according to Claim 7.

## Revendications

1. Bobine et/ou spire de bobine électrotechnique fabriqué par moulage (100 ; 200; 300; 400), comprenant deux spires ou plus (102-105; 202-205; 217-222; 302-305 ; 332-335), au moins largement chacune des spires (102-105 ; 202-205 ; 217-222 ; 302-305 ; 332-335) étant disposée au moins globalement dans un plan de spire (101 ; 201 ; 208-211 ; 301 ; 331 ; 401 ; 431, 461) correspondant à cette spire, le plan de spire (101 ; 201 ; 208-211 ; 301 ; 331 ; 401 ; 431, 461) étant au moins largement perpendiculaire par rapport à un axe de bobine (107 ; 207 ; 307) commun au moins globalement à toutes les spires (102-105 ; 202-205 ; 217-222 ; 302-305 ; 332-335), **caractérisée en ce que**, dans un ou plusieurs des plans de spires (101 ; 201 ; 208-211 ; 301 ; 331 ; 401 ; 431, 461), au moins deux spires (102-105 ; 202-205 ; 217-222 ; 302-305 ; 332-335) étant disposées, au moins dans un état d'installation, de manière au moins globalement concentrique les unes dans les autres, la bobine et/ou la spire de bobine (200) comprenant une structure d'une seule pièce avec une pièce moulée formant conjointement toutes les spires (202-205 ; 217-222).

2. Bobine et/ou spire de bobine (100 ; 200 ; 300 ; 400) selon la revendication 1, comprenant plusieurs spires (102-105 ; 202-205 ; 217-222 ; 302-305 ; 332-335) dans au moins deux plans de spires (101 ; 201 ; 208-211 ; 301 ; 331 ; 401 ; 431, 461), **caractérisée en ce que** les spires (102-105 ; 202-205 ; 217-222 ; 302-305 ; 332-335) qui sont disposées dans un premier des plans de spires (101 ; 201 ; 208-211 ; 301 ; 331 ; 401 ; 431, 461) sont enroulées, par rapport à une direction de flux de courant à travers les spires (102-105; 202-205; 217-222; 302-305; 332-335), de manière connectée entre elles, dans la direction de l'axe de bobine (107 ; 207 ; 307) et **en ce que** les spires (102-105 ; 202-205 ; 217-222 ; 302-305 ; 332-335) qui sont disposées dans un deuxième des plans de spires (101 ; 201 ; 208-211 ; 301 ; 331 ; 401 ; 431, 461) directement adjacent au premier des plans de spires (101 ; 201 ; 208-211 ; 301 ; 331 ; 401 ; 431, 461) sont enroulées, par rapport à la même direction de flux de courant à travers les spires (102-105 ; 202-205 ; 217-222 ; 302-305 ; 332-335), de manière connectée entre elles, loin de l'axe de bobine (107 ; 207 ; 307).

3. Bobine et/ou spire de bobine (100 ; 200 ; 300 ; 400) selon la revendication 1 ou 2, **caractérisée en ce que** les directions d'enroulement de toutes les spires (102-105 ; 202-205 ; 217-222 ; 302-305 ; 332-335) coïncident.

4. Bobine et/ou spire de bobine (100 ; 200 ; 300 ; 400) selon l'une ou plusieurs des revendications précédentes, **caractérisée en ce que**, dans l'état d'installation, les spires (102-105 ; 202-205 ; 217-222 ; 302-305 ; 332-335) adjacentes sont adaptées entre elles avec leur contour de section transversale.

5. Bobine et/ou spire de bobine (100 ; 200 ; 300 ; 400) selon l'une ou plusieurs des revendications précédentes, prévue pour l'installation dans un espace d'installation, **caractérisé en ce que** la bobine et/ou spire de bobine (100 ; 200 ; 300 ; 400) est adaptée avec son contour de section transversale à un contour de l'espace d'installation.

6. Bobine et/ou spire de bobine (100 ; 200 ; 300 ; 400) selon la revendication 4 ou 5, **caractérisée en ce que** le contour de section transversale des spires (102-105 ; 202-205; 217-222; 302-305; 332-335) présente une dimension supérieure à la dimension dans la direction de l'axe de bobine (107 ; 207 ; 307).

7. Procédé de fabrication d'une bobine et/ou spire de bobine électrotechnique (100; 200; 300; 400) selon l'une ou plusieurs des revendications précédentes, **caractérisé en ce que**, dans une première étape de fabrication, la spire de bobine (100; 200; 300; 400) est moulée sous la forme d'une pièce moulée constituant conjointement toutes les spires (202-205 ; 217-222) ou sous la forme d'une pluralité de pièces moulées (110-113) formant chacune une partie de toutes les spires (102-105 ; 302-305 ; 332-335) de la bobine et/ou de la spire de bobine (100 ; 200 ; 300 ; 400), dans un état de fabrication à partir d'un matériau électro-conducteur, moyennant quoi, dans cet état de fabrication, pour la formation d'espaces intermédiaires pour la formation d'une forme moulée, les différentes spires (102-105 ; 202-205 ; 217-222 ; 302-305 ; 332-335) de chacune des pièces moulées (110-113) prennent les unes par rapport aux autres différentes positions, qui sont réparties sur des plans de spires séparés entre eux le long de l'axe de bobine (107 ; 207 ; 307) et moyennant quoi, dans une étape de fabrication suivante, la pièce moulée ou les pièces moulées (110-113) sont pressées ensemble en direction de l'axe de bobine (107 ; 207 ; 307), de façon à ce que les spires (102-105 ; 202-205 ; 217-222 ; 302-305 ; 332-335) adoptent leur position dans l'état d'installation.

8. Appareil électrique, **caractérisé par** une bobine ou spire de bobine électrotechnique fabriquée par moulage (100; 200; 300; 400) selon l'une ou plusieurs des revendications 1 à 6 ou une bobine ou spire de bobine électrotechnique (100 ; 200 ; 300 ; 400) fabriquée selon la revendication 7.
